# EUROPÄISCHE PATENTSCHRIFT

(11) **EP 3 363 713 B1**
(45) Veröffentlichungstag und Bekanntmachung des Hinweises auf die Patenterteilung: **19.08.2020**
(21) Anmeldenummer: 18157164.7
(22) Anmeldetag: 16.02.2018
(51) Int. Cl.: B62D 15/02, B60Q 1/52

(54) **VERFAHREN ZUM REDUZIEREN VON LATENZZEITEN BEIM BESCHLEUNIGEN EINES KRAFTFAHRZEUGS, FAHRERASSISTENZSYSTEM UND KRAFTFAHRZEUG**
METHOD FOR REDUCING LATENCIES WHEN ACCELERATING A MOTOR VEHICLE, DRIVER ASSISTANCE SYSTEM AND MOTOR VEHICLE
PROCÉDÉ DE RÉDUCTION DE TEMPS DE LATENCE LORS D'ACCÉLÉRATION D'UN VÉHICULE AUTOMOBILE, SYSTÈME D'AIDE À LA CONDUITE ET VÉHICULE AUTOMOBILE

(30) Priorität: 16.02.2017 DE 102017103132
(43) Veröffentlichungstag der Anmeldung: 22.08.2018
(73) Patentinhaber: Valeo Schalter und Sensoren GmbH, 74321 Bietigheim-Bissingen (DE)
(72) Erfinder: Ayyappan, Thirumalai Kumarasamy, 74321 Bietigheim-Bissingen (DE)
(74) Vertreter: Pothmann, Karsten

(56) Entgegenhaltungen:
- EP-A1- 3 196 083
- EP-A1- 3 334 623
- DE-A1-102009 000 726
- DE-A1-102009 053 939
- DE-A1-102014 215 243
- US-A- 6 070 682
- US-A1- 2012 025 969

## Beschreibung

Die Erfindung betrifft ein Verfahren zum zumindest teilweisen Kompensieren einer Latenzzeit bei einem Beschleunigen eines Kraftfahrzeugs, wobei zum Ausführen eines ersten Beschleunigungsvorgangs eine Beschleunigungsanforderung an eine Einrichtung des Kraftfahrzeugs gesendet wird und die Einrichtung in Abhängigkeit von der Beschleunigungsanforderung das Kraftfahrzeug beschleunigt, wobei ein erster Zeitpunkt für ein Initiieren des ersten Beschleunigungsvorgangs bestimmt wird. Des Weiteren betrifft die Erfindung auch ein Fahrerassistenzsystem für ein Kraftfahrzeug, sowie ein Kraftfahrzeug mit einem Fahrerassistenzsystem.

Über die Jahre hinweg wurden in Kraftfahrzeugen mechanische Verbindungen zunehmend durch Steuerungen über elektrische Leitungen, Servomotoren und elektromechanische Aktoren ersetzt, was im Allgemeinen als sogenanntes Drive-by-Wire bezeichnet wird. Daraus ergeben sich vielzählige Vorteile, jedoch treten hierbei auch bestimmte Nebeneffekte auf. In älteren Kraftfahrzeugen beispielsweise wird, sobald der Fahrer auf das Gaspedal tritt, die Verbindung zum Motor mechanisch hergestellt und es ergibt sich daraus ein sofortiges Einsetzen einer Beschleunigung. Jedoch bei Drive-by-Wire-Systemen, bei denen der Motor elektronisch gesteuert wird, ergeben sich Latenzzeiten in vielzähligen Schritten dieser Steuerung. Solche Latenzzeiten ergeben sich dabei insbesondere bei der Übermittlung von Signalen über elektrische Leitungen, im Motor, der elektronischen Steuerung, und so weiter. Üblicherweise unterstützt die Motorsteuerung weiterhin vielzählige verschiedene Funktionen, sodass es nicht möglich oder sehr schwierig wäre, die Motorsteuerung so auszugestalten, dass dieser ihr Reaktionsverhalten optimal auf all diese Funktionen anpasst.

Solche Latenzzeiten können im schlimmsten Fall, gerade mit Blick auf Beschleunigungsvorgängen, worunter auch negative Beschleunigungsvorgänge, das heißt Bremsvorgänge, zu verstehen sind, die Verkehrssicherheit stark beeinträchtigen und zu Unfällen führen. Ein Beispiel hierfür wäre ein automatisches Parkmanöver, bei welchem das Kraftfahrzeug berechnet, zu welchem Zeitpunkt ein Bremsvorgang eingeleitet werden muss, um rechtzeitig an einer vorbestimmten Stelle zum Stillstand zu gelangen. Wird dann der Bremsvorgang zu diesem Zeitpunkt eingeleitet, so findet jedoch zu diesem Zeitpunkt nicht gleich die Verzögerung statt, sondern erst nach einer bestimmten Latenzzeit, während welcher sich das Kraftfahrzeug ungebremst weiterbewegt. Entsprechend kommt das Kraftfahrzeug auch nicht an der gewünschten Stelle zum Stillstand, sondern benötigt einen längeren Bremsweg als den vorab Berechneten.

Die US 2009/0 254 260 A1 beschäftigt sich ebenfalls mit der Reduktion von Latenzzeiten, jedoch nicht bei Beschleunigungsvorgängen sondern vielmehr bei der Umfelderfassung durch Ultraschallsensoren. Solche können unterschiedliche Betriebsmethoden aufweisen, in welchen diese kurze oder lange Pulse aussenden. Eine Reduktion der Latenzzeiten soll hierbei erreicht werden, indem die Betriebsmoden der Ultraschallsensoren in Abhängigkeit von der Kraftfahrzeuggeschwindigkeit gewählt werden.

Die nachveröffentlichte EP 3 334 623 A1 zeigt ein System zum Betreiben eines autonomen Fahrzeugs. Dabei wird vorgeschlagen eine Totzeit für ein Lenken, Beschleunigen und Bremsen abzuschätzen und in nachfolgenden Steuerbefehlen zu kompensieren.

Die nachveröffentlichte EP 3 196 083 A1 zeigt ein Verfahren für eine Selbstbremsung eines Fahrzeugs, bei dem ein Zeitwert der Totlaufzeit in einer Kollisionsdetektionseinrichtung und dem Bremssystem bereitgestellt und dieser Zeitwert beim Aktivieren oder Betätigen der Radbremsen berücksichtigt wird.

Die US 6 070 682 A ist als nächstliegender Stand der Technik nach dem Oberbegriff des Anspruchs 1 zu sehen und zeigt ein automatisches Verzögerungsregelsystem für ein Fahrzeug. Dabei ist vorgesehen, eine Zeitverzögerung zwischen einem Zeitpunkt, in dem ein Befehl zum Beschleunigen oder Verzögern des Fahrzeugs erfolgt, und einem Zeitpunkt, in dem das Fahrzeug beschleunigt oder verzögert wird, zu kompensieren.

Die DE 10 2009 000 726 A1 zeigt ein Verfahren, bei dem eine Totzeit zwischen einem Lenkwinkelbefehl und dessen Ausführung ermittelt und beim Einparken berücksichtigt wird.

Aufgabe der vorliegenden Erfindung ist es, ein Verfahren zum zumindest teilweisen Kompensieren einer Latenzzeit bei einem Beschleunigen eines Kraftfahrzeugs, ein Fahrerassistenzsystem und ein Kraftfahrzeug bereitzustellen, mittels welchen der Einfluss von Latenzzeiten auf Beschleunigungsvorgänge, insbesondere von Latenzzeiten in der Hardware des Motorkontrollsystems, reduziert werden kann.

Diese Aufgabe wird gelöst durch ein Verfahren, ein Fahrerassistenzsystem und ein Kraftfahrzeug mit den Merkmalen gemäß den jeweiligen unabhängigen Ansprüchen. Vorteilhafte Ausgestaltungen der Erfindung sind Gegenstand der abhängigen Ansprüche, der Beschreibung und der Figuren.

Bei einem erfindungsgemäßen Verfahren zum zumindest teilweisen Kompensieren einer Latenzzeit bei einem Beschleunigen eines Kraftfahrzeugs wird zum Ausführen eines ersten Beschleunigungsvorgangs eine Beschleunigungsanforderung an eine Einrichtung des Kraftfahrzeugs gesendet und die Einrichtung beschleunigt in Abhängigkeit von der Beschleunigungsanforderung das Kraftfahrzeug. Weiterhin wird ein erster Zeitpunkt für ein Initiieren des ersten Beschleunigungsvorgangs bestimmt. Weiterhin wird vor dem Initiieren des ersten Beschleunigungsvorgangs, und insbesondere auch vor dem ersten Zeitpunkt, ein Schätzwert für eine Latenzzeit zwischen dem Senden der Beschleunigungsanforderung und dem Beschleunigen des Kraftfahrzeugs bestimmt. Zudem wird zum Initiieren des ersten Beschleunigungsvorgangs die Beschleunigungsanforderung zu einem zweiten Zeitpunkt an die Einrichtung gesendet, der um den Schätzwert für die Latenzzeit gegenüber dem ersten Zeitpunkt früher ist. Der Schätzwert stellt einen Wert in einer Zeiteinheit dar, wobei der Wert die Latenzzeit abschätzt beziehungsweise approximiert. Der Schätzwert wird vorzugsweise in Abhängigkeit von einer, insbesondere gemessenen und/oder auf Messergebnissen beruhenden, mittleren Latenzzeit ermittelt. Weiterhin ist es vorteilhaft, wenn der Schätzwert zudem in Abhängigkeit von einer Wegstrecke, zum Beispiel der während des Beschleunigungsvorgangs zurückzulegenden Strecke, ermittelt wird. Ebenso vorteilhaft ist eine situationsabhängige Bestimmung des Schätzwerts, wie sie später näher erläutert wird.

Die Erfindung hat den großen Vorteil, dass es durch die Vorherbestimmung des ersten Zeitpunkts ermöglicht wird, den Beschleunigungsvorgang nicht erst zu diesem ersten Zeitpunkt zu initiieren sondern bereits früher, um dadurch die Latenzzeit zumindest teilweise kompensieren zu können. Entsprechend liegt also der zweite Zeitpunkt zeitlich vor dem ersten Zeitpunkt. Wird also dieser Beschleunigungsvorgang entsprechend früher initiiert, so wird es ermöglicht, dass zum späteren ersten Zeitpunkt das Beschleunigen bereits ausgeführt und nicht erst die Beschleunigungsanfrage zu diesem Zeitpunkt gesendet wird. Hierdurch lassen sich Latenzzeiten bei Beschleunigungsvorgängen effektiv kompensieren. Die durch den Schätzwert approximierte Latenzzeit stellt dabei eine Latenzzeit in der Hardware des Motorkontrollsystems dar. Solche Latenzzeiten können dabei bei einer Übermittlung von Signalen über elektrische Leitungen auftreten, im Motor selbst, der elektronischen Steuerung, und so weiter. Derartige Latenzzeiten, insbesondere in Bezug auf einen Beschleunigungsvorgang, können zum Beispiel 500 Millisekunden oder auch 1000 Millisekunden betragen. Sie liegen also typischerweise im drei- bis vierstelligen Millisekundenbereich.

In gleicher Weise kann das erfindungsgemäße Verfahren auch zum Beenden eines Beschleunigungsvorgang Gangs ganz analog umgesetzt werden. Entsprechend wird das Beenden eines Beschleunigungsvorgangs zu dem zweiten Zeitpunkt, der um den Schätzwert für die Latenzzeit gegenüber dem ersten Zeitpunkt früher ist, initiiert, sodass die Latenzzeit zwischen dem Initiieren der Beendigung des Beschleunigungsvorgangs und dem Beenden des Beschleunigungsvorgangs zumindest teilweise kompensiert wird.

Wie bereits eingangs erwähnt, soll unter einer Beschleunigung eines Kraftfahrzeugs nicht nur eine positive Beschleunigung, sondern auch eine negative Beschleunigung verstanden werden, das heißt also dass unter einem Beschleunigungsvorgang auch ein Bremsvorgang verstanden werden kann. Die Einrichtung des Kraftfahrzeugs zum Ausführen des Beschleunigungsvorgangs kann vorzugsweise eine Antriebseinrichtung und/oder Bremseinrichtung darstellen oder zumindest umfassen.

Erfindungsgemäß wird eine Fahrtrajektorie für einen autonomen Fahrvorgang des Kraftfahrzeugs bestimmt, wobei der erste Zeitpunkt in Abhängigkeit von der bestimmten Fahrtrajektorie bestimmt wird. Das Verfahren lässt sich dabei auf besonders einfache Weise auf vollständig autonom fahrende Kraftfahrzeuge, wie beim voll- oder hochautomatisierten Fahren, anwenden, sowie auch auf autonome Fahrmanöver beim automatischen Ein- und/oder Ausparken. In solchen Fällen berechnet das Kraftfahrzeug beziehungsweise ein Fahrerassistenzsystem des Kraftfahrzeugs die Fahrtrajektorie, auf welcher das Kraftfahrzeug geführt werden soll, im Voraus, sowie auch die Bewegungseigenschaften des Kraftfahrzeugs entlang dieser Kurve, das heißt Beschleunigungs- oder Bremspunkte beziehungsweise Beschleunigungsphasen, Bremsphasen, Phasen mit konstanter Geschwindigkeit, oder Ähnlichem. Entsprechend wird für solche Fahrtrajektorien auch der Zeitpunkt, an welchem ein Beschleunigungs- beziehungsweise Bremsvorgang initiiert werden soll, vorherbestimmt. Diese Zeitpunkte können nun vorteilhafterweise als der vorbestimmte erste Zeitpunkt dienen, sodass der zu diesem Zeitpunkt auszuführende Beschleunigungsvorgang bereits um den ermittelten Schätzwert für die Latenzzeit früher initiiert werden kann.

Erfindungsgemäß stellt der autonome Fahrvorgang einen Einparkvorgang des Kraftfahrzeugs in eine Parklücke dar, wobei insbesondere das Kraftfahrzeug während des Einparkvorgangs auf der bestimmten Fahrtrajektorie geführt wird. Dies beruht auf der Erkenntnis, dass sich der Einfluss von Latenzzeiten stärker auswirkt, je kürzer die Strecke ist, auf welcher ein Beschleunigungsvorgang durchgeführt werden soll. Soll ein Kraftfahrzeug beispielsweise auf einer Strecke von 50 Metern verzögert werden, so ist die Verlängerung dieser Strecke bedingt durch die Latenzzeit bezogen auf die Gesamtstrecke relativ gering, während sie bei einer Strecke von zum Beispiel nur 2 Metern, auf welcher das Kraftfahrzeug verzögert werden soll, sehr groß ist. Gerade bei Einparkvorgängen oder Einparkmanövern sind die Streckenlängen beziehungsweise Weglängen üblicherweise relativ kurz, auf welchen das Kraftfahrzeug beschleunigt beziehungsweise verzögert wird, sodass eine Latenzzeitkompensation durch das Initiieren des Beschleunigungsvorgangs zum zweiten Zeitpunkt, der um den Schätzwert für die Latenzzeit gegenüber dem ersten Zeitpunkt früher ist, besonders vorteilhaft ist.

Das erfindungsgemäße Verfahren kann jedoch nicht nur bei autonomen Fahrvorgängen und autonomen Fahrmanövern zum Einsatz kommen, sondern auch bei einem manuellen

Manövrieren des Kraftfahrzeugs durch den Fahrer. Das heißt, die beschriebenen Ausführungsformen in Bezug auf den autonomen Fahrvorgang sowie insbesondere den autonomen Einparkvorgang können in gleicher Weise auch für manuelle Fahrvorgänge und manuelle Ein- und Ausparkvorgänge umgesetzt werden. Dazu stellt es eine besonders vorteilhafte Ausgestaltung der Erfindung dar, wenn ein Fahrverhalten eines Fahrers des Kraftfahrzeugs beobachtet wird, wobei der erste Zeitpunkt in Abhängigkeit vom beobachteten Fahrverhalten bestimmt wird. Das Kraftfahrzeug beziehungsweise das Fahrerassistenzsystem ist dabei vorzugsweise dazu ausgelegt, während der Fahrer mit dem Kraftfahrzeug fährt, ein charakteristisches Fahrverhalten des Fahrers durch Beobachten des Fahrverhaltens zu ermitteln. Das Fahrverhalten des Fahrers kann gewissermaßen durch das Kraftfahrzeug erlernt werden. Dadurch ist vorteilhafterweise die Möglichkeit bereitgestellt, aus dem erlernten, charakteristischen Fahrverhalten des Fahrers Vorhersagen über sein zukünftiges Fahrverhalten zu treffen. Somit kann das Kraftfahrzeug auch Vorhersagen, in welchen Situationen der Fahrer typischerweise zu welchen Zeitpunkten Beschleunigungsvorgänge einleitet. Beispielsweise kann so ermittelt werden ob der Fahrer im Falle eines Vorausliegenden Hindernisses oder vorausfahrenden Fahrzeugs typischerweise sehr kurzfristig und stark abbremst oder sehr frühzeitig und weniger stark. Dies kann somit vorteilhafterweise genutzt werden, um bereits vor dem Initiieren einer solchen Beschleunigungsvorgangs durch den Fahrer den ersten Zeitpunkt vorherzusagen, wiederum den Schätzwert für die Latenzzeit zu ermitteln und entsprechend den Beschleunigungsvorgang um diesen Schätzwert früher als den vorhergesagten ersten Zeitpunkt zu initiieren.

Beim Beobachten des Fahrverhaltens des Fahrers ist es dabei zudem vorteilhaft, wenn vorbestimmte Phasen der Beschleunigung detektiert werden. Es kann also beobachtet werden, in welcher Situation der Fahrer zu welchem Zeitpunkt das Kraftfahrzeug beschleunigt oder verzögert, oder wie lange. Beispielsweise können bei einem manuellen oder semiautonomen Einparkvorgang in verschiedenen Parksituationen die vom Fahrer bevorzugten Einparktrajektorien und diesen zugeordnete Beschleunigungs- und Verzögerungspunkte beobachtet und gespeichert werden, um dadurch für eine jeweilige Einparksituation, zum Beispiel Rückwärtseinparken, Vorwärtseinparken, Einparken in eine Längsparklücke oder Querparklücke, eine charakteristische Trajektorie beziehungsweise Bewegungskurve des Kraftfahrzeugs zu ermitteln. Hierzu können bekannte lernende Systeme beziehungsweise Lernalgorithmen verwendet werden, die sich beispielsweise neuronaler Netze bedienen.

Bei einer besonders vorteilhaften Ausgestaltung der Erfindung wird der Schätzwert für die Latenzzeit in Abhängigkeit von einer mittleren Latenzzeit, die einen Mittelwert von mehreren gemessenen Latenzzeiten darstellt, bestimmt. Hierdurch lässt sich ein besonders genauer Schätzwert für die Latenzzeit ableiten, da dieser auf Messungen realer Latenzzeiten beruht. Diese gemessenen Latenzzeiten lassen sich beispielsweise auf Testfahrten gewinnen und können dann für ein betreffendes Kraftfahrzeug in diesem abgelegt werden. Das Kraftfahrzeug kann derartige Messungen aber auch selbst durchführen und sich sozusagen selbst kalibrieren. Solche Latenzzeiten, gerade betreffend die Motorsteuerung, hängen sehr stark von der Art des verwendeten Motors ab. Daher ist es besonders vorteilhaft, wenn das Kraftfahrzeug derartige Latenzzeitmessungen, um daraus den Mittelwert zu bilden, selbst durchführt. Aber auch die auf Testfahrten gewonnenen Messergebnisse in Bezug auf Latenzzeiten können auch Motortyp-spezifisch bereitgestellt werden.

Bei einer weiteren vorteilhaften Ausgestaltung der Erfindung wird während einer Fahrt des Kraftfahrzeugs und insbesondere im Fall, dass zumindest ein zweiter Beschleunigungsvorgang vor dem Initiieren des ersten Beschleunigungsvorgangs durchgeführt wird, eine dem zumindest einen zweiten Beschleunigungsvorgang zugeordnete Latenzzeit zwischen einem Senden der dem zweiten Beschleunigungsvorgang zugeordneten zweiten Beschleunigungsanforderung und einem in Abhängigkeit von der zweiten Beschleunigungsanfrage durchgeführten Beschleunigen des Kraftfahrzeugs gemessen, wobei die gemessene Latenzzeit eine der mehreren gemessenen Latenzzeiten, aus welchen die mittlere Latenzzeit ermittelt wird, darstellt. Das Kraftfahrzeug kann also selbsttätig bei vorher durchgeführten Beschleunigungsvorgängen die jeweiligen Latenzzeiten messen und daraus die mittlere Latenzzeit bereitstellen, die zur Berechnung des Schätzwerts für die Latenzzeit herangezogen werden kann. Dieser zweite Beschleunigungsvorgang muss aber nicht notwendigerweise vor dem Initiieren des ersten Beschleunigungsvorgangs durchgeführt werden. Beispielsweise kann im Kraftfahrzeug auch zunächst ein Standardwert für die mittlere Latenzzeit vorgegeben sein, auf Basis welcher der Schätzwert ermittelt wird. Führt das Kraftfahrzeug dann einen Beschleunigungsvorgang gemäß dem erfindungsgemäßen Verfahren aus, kann zunächst der Schätzwert in Abhängigkeit von diesem Standard-Latenzzeitwert ermittelt werden. Gleichzeitig kann auch bei jedem beliebigen Beschleunigungsvorgang die jeweilige Latenzzeit gemessen werden, wobei dann diese Latenzzeitmessungen herangezogen werden können, um den vorab festgelegten Standardwert durch die auf den Messungen beruhende mittlere Latenzzeit zu ersetzen. Das heißt also, dass der zweite Beschleunigungsvorgang vor dem Initiieren des ersten Beschleunigungsvorgangs durchgeführt wird, ist lediglich als optional anzusehen. Der zweite Beschleunigungsvorgang kann auch den ersten Beschleunigungsvorgang darstellen. Gemäß dem erfindungsgemäßen Verfahren und seinen Ausgestaltungen kann zwar die Latenzzeit zumindest teilweise kompensiert werden, diese tritt jedoch dennoch auf und kann somit auch gemessen werden. Das heißt also auch für den ersten Beschleunigungsvorgang kann die Zeitspanne zwischen dem Initiieren dieses Vorgangs, das heißt dem Senden der Beschleunigungsanfrage, und einem tatsächlichen Ausführen des Beschleunigungsvorgangs gemessen und als gemessene Latenzzeit zur Bildung eines Mittelwert herangezogen werden. Dies hat den großen Vorteil, dass auch die Ermittlung des Schätzwerts im Laufe der Zeit immer genauer und besser durchgeführt werden kann.

Bei einer weiteren vorteilhaften Ausgestaltung der Erfindung wird der Schätzwert in Abhängigkeit von mindestens einem Situationsparameter bestimmt, welcher mehrere verschiedenen Situationen charakterisiert. Dies beruht auf der Erkenntnis, dass die Latenzzeit nicht nur von fixen Fahrzeuggrößen, wie beispielsweise dem verwendeten Motor, abhängt, sondern sich auch von Situation zu Situation unterscheiden kann. Soll das Kraftfahrzeug bei einer Bergabfahrt positiv beschleunigt werden, so ergeben sich in einer solchen Situation aufgrund der gewichtsbedingten Hangabtriebskraft kürzere Latenzzeiten als beispielsweise bei einer Bergauffahrt. Solche unterschiedlichen Situationen können nun vorteilhafterweise durch einen Situationsparameter charakterisiert werden, und entsprechend bei der Bestimmung des Schätzwerts berücksichtigt werden.

Bei einer weiteren vorteilhaften Ausgestaltung der Erfindung charakterisiert der mindestens eine Situationsparameter die Situationen durch zumindest eine der folgenden Größen: ein Gewicht des Kraftfahrzeugs, eine Anzahl von Insassen des Kraftfahrzeugs, eine Fahrbahnneigung einer Fahrbahn, ein Reibwert zwischen einem Rad des Kraftfahrzeugs und einer Fahrbahn, ein Fahrbahnbelag und eine Wetterinformation. All diese Größen beeinflussen entsprechend auch die Latenzzeit. Wetterinformationen können hierbei insofern relevant sein, als beispielsweise bei Regen auf nasser Fahrbahn auch die Reibung zwischen dem Rad und der Fahrbahn verringert. Hierdurch verlängert sich bekanntermaßen der Bremsweg, was vorteilhafterweise ebenfalls bei der Bestimmung des Schätzwerts für die Latenzzeit berücksichtigt werden kann. Latenzzeitmessungen können entsprechend in vielzähligen unterschiedlichen Situationen, also beispielsweise bei Bergauffahrt, bei Bergabfahrt, bei nasser Fahrbahn, für unterschiedlich viele Insassen, mit unterschiedlichen Reifen, und so weiter, gemessen werden und entsprechend für jeweilige Situationen ein betreffender mittlerer Latenzzeitwert in einem Speicher des Kraftfahrzeugs abgelegt werden.

Dabei ist es ebenfalls besonders vorteilhaft, wenn für die mehreren durch den mindestens einen Situationsparameter charakterisierbaren Situationen eine jeweilige mittlere Latenzzeit bereitgestellt wird, wobei zur Bestimmung des Schätzwerts diejenige der mittleren Latenzzeiten ausgewählt wird, die dem die aktuelle Situation charakterisierenden Situationsparameter zugeordnet ist. Die Situationsparameter oder der zumindest eine Situationsparameter kann für eine aktuelle Situation zum Beispiel durch geeignete Sensoren des Kraftfahrzeugs erfasst werden, zum Beispiel Innenraumkameras zur Erfassung der Anzahl der Insassen, eine Aquaplaningsensorik zur Bestimmung einer nassen Fahrbahn, Neigungssensoren zur Bestimmung der aktuellen Fahrbahnneigung, und so weiter. Wird zum Beispiel erfasst, dass das Kraftfahrzeug gerade bergab fährt, so kann zur Bestimmung des Schätzwerts diejenige mittlere Latenzzeit aus dem Speicher abgerufen werden, die für den die Bergabfahrt charakterisierenden Situationsparameter abgelegt ist. Es können somit vorteilhafterweise für unterschiedliche Situationen jeweilige mittlere Latenzzeiten in einem Speicher abgelegt sein, für das Durchführen des ersten Beschleunigungsvorgangs der aktuelle Situationsparameter bestimmt werden, und die entsprechende mittlere Latenzzeit aus dem Speicher abgerufen und daraus der Schätzwert ermittelt werden. Hierdurch ist eine besonders gute Situationsanpassung bereitgestellt.

Bei einer weiteren vorteilhaften Ausgestaltung der Erfindung wird der Schätzwert in Abhängigkeit von einer räumlichen Länge einer Fahrtrajektorie bestimmt, auf welcher sich das Kraftfahrzeug während des Ausführens des ersten Beschleunigungsvorgangs bewegt. Wie bereits beschrieben, wirken sich Latenzzeiten bei langen Strecken, auf welchen der Beschleunigungsvorgang durchgeführt werden soll, weniger stark aus als bei kurzen Strecken. Dies kann durch diese vorteilhafte Ausgestaltung der Erfindung berücksichtigt werden.

Dabei ist es vorteilhaft, wenn der Schätzwert derart in Abhängigkeit von der räumlichen Länge bestimmt wird, dass dieser indirekt proportional zur räumlichen Länge ist. Das bedeutet also, je kürzer die Strecke ist, auf welcher der erste Beschleunigungsvorgang durchgeführt werden soll, desto größer ist der Schätzwert für die Latenzzeit, und desto früher in Bezug auf den ersten Zeitpunkt wird der Beschleunigungsvorgang initiiert. Diese Weglänge kann bei autonomen Fahrmanövern sowie auch beim manuellen Fahrmanöver ermittelt werden. Bei autonomen Fahrmanövern basiert die Ermittlung dieser Streckenlänge vorzugsweise wiederum auf der vorab berechneten Fahrtrajektorie, auf der das Kraftfahrzeug geführt wird, während bei manuellen Fahrvorgängen sich eine solche Weglänge wiederum aus einer Beobachtung des Fahrers, seines Fahrverhaltens der bestimmten Beschleunigungsphasen, und so weiter, ableiten lässt, woraus sich dann für entsprechende Beschleunigungsvorgänge charakteristische Weglängen, zum Beispiel auch spezifisch für unterschiedliche Situationen, ableiten lassen.

Ein erfindungsgemäßes Fahrerassistenzsystem für ein Kraftfahrzeug ist dazu ausgelegt, ein erfindungsgemäßes Verfahren oder eines seiner Ausgestaltungen durchzuführen.

Ein erfindungsgemäßes Kraftfahrzeug weist ein erfindungsgemäßes Fahrerassistenzsystem auf.

Die mit Bezug auf das erfindungsgemäße Verfahren und seinen Ausgestaltungen beschriebenen Merkmale, Merkmalskombinationen und deren Vorteile gelten damit in gleicher Weise für das erfindungsgemäße Fahrerassistenzsystem und das erfindungsgemäße Kraftfahrzeug.

Weitere Merkmale der Erfindung ergeben sich aus den Ansprüchen, den Figuren und der Figurenbeschreibung.

Dabei zeigen:
- Fig. 1: eine schematische Darstellung eines Kraftfahrzeugs gemäß einem Ausführungsbeispiel der Erfindung;
- Fig. 2: eine schematische Darstellung eines Einparkvorgangs zur Veranschaulichung eines Verfahrens zum zumindest teilweisen Kompensieren einer Latenzzeit bei einem Beschleunigen eines Kraftfahrzeugs gemäß einem Ausführungsbeispiel der Erfindung; und
- Fig. 3: ein Diagramm zur Veranschaulichung eines zeitlichen Verlaufs einer Geschwindigkeit beim Ausführen eines Verfahrens zum zumindest teilweisen Kompensieren einer Latenzzeit bei einem Beschleunigen eines Kraftfahrzeugs gemäß einem weiteren Ausführungsbeispiel der Erfindung.

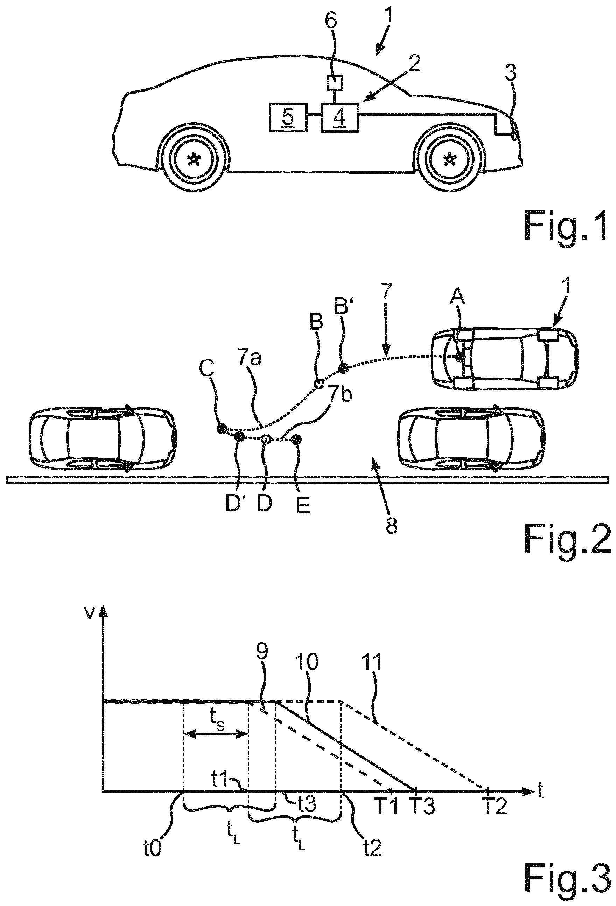

Fig. 1 zeigt eine schematische Darstellung eines Kraftfahrzeugs 1, welches zur Ausführung eines Verfahrens zum zumindest teilweisen Kompensieren beziehungsweise effektiven Reduzieren einer Latenzzeit bei einem Beschleunigen des Kraftfahrzeugs 1 gemäß einem Ausführungsbeispiel der Erfindung ausgelegt ist. Das Kraftfahrzeug 1 weist dabei zunächst ein Fahrerassistenzsystem 2 auf, sowie eine Umfeldsensorik 3 zur Erfassung zumindest eines Teils des Fahrzeugumfelds. Das Fahrerassistenzsystem 2 weist weiterhin eine Steuereinrichtung 4 auf und einen Speicher 5, der mit der Steuereinrichtung 4 gekoppelt ist. Zudem hat das Kraftfahrzeug 1 auch eine Einrichtung 6, die als Antriebseinrichtung, beispielsweise ein Motor, zum Beispiel ein Verbrennungsmotor und/oder ein Elektromotor, und/oder als eine Bremseinrichtung ausgebildet ist, und die ebenfalls mit der Steuereinrichtung 4 gekoppelt ist. Zudem kann das Kraftfahrzeug 1 auch weitere hier nicht näher dargestellte Erfassungsmittel, zum Beispiel zum Erfassen der Fahrzeuggeschwindigkeit, Fahrervorgaben, und so weiter, umfassen.

Soll nun einen Beschleunigungsvorgang, umfassend auch Bremsvorgänge, durchgeführt werden, so sendet die Steuereinrichtung 4 eine entsprechende Beschleunigungsanforderung an die Antriebseinrichtung 6, welche daraufhin die Beschleunigungsanforderung in eine Beschleunigung des Kraftfahrzeugs 1 umsetzt. Zwischen dem Senden dieser Beschleunigungsanfrage und der tatsächlichen Ausführung der Beschleunigung vergeht eine gewisse Latenzzeit. Diese wird bereits vor dem Senden der Beschleunigungsanfrage durch die Steuereinrichtung 4 durch einen Schätzwert approximiert. Die Steuereinrichtung 4 sendet dann entsprechend die Beschleunigungsanforderung um diesen bestimmten Schätzwert früher als ein vorbestimmter erster Zeitpunkt, zu welchem der Beschleunigungsvorgang ausgeführt werden soll. Diese Vorgehensweise wird nunmehr anhand von Fig. 2 beschrieben.

Fig. 2 zeigt dabei exemplarisch eine schematische Darstellung eines Einparkvorgangs in eine Parklücke 8 gemäß einem Ausführungsbeispiel der Erfindung. Insbesondere handelt es sich hierbei um einen autonomen Einparkvorgang. Bei solchen Einparkvorgängen fährt üblicherweise das Kraftfahrzeug 1, insbesondere auch manuell gesteuert durch einen Fahrer, zunächst an dieser Parklücke vorbei, wobei die Umfeldsensorik 3 des Kraftfahrzeugs 1 die Parklücke 8 vermisst. Bringt der Fahrer das Kraftfahrzeug 1 anschließend zum Stillstand, berechnet das Kraftfahrzeug 1, insbesondere die Steuereinrichtung 4, auf Basis der durch die Umfeldsensorik 3 bereitgestellten Umgebungsdaten eine Einparktrajektorie 7 ausgehend vom Startpunkt A des Kraftfahrzeugs 1 bis zu einem Endpunkt E, welcher die finale Parkposition darstellt. Das Kraftfahrzeug 1 wird dann auf dieser berechneten Einparktrajektorie 7 in die Parklücke 8 eingeparkt.

Zusätzlich zum Verlauf dieser Trajektorie 7 berechnet die Steuereinrichtung 4 vor diesem Einparkvorgang auch einen Bewegungsverlauf, insbesondere ein Geschwindigkeitsprofil des Kraftfahrzeugs 1, gemäß welchem das Kraftfahrzeug 1 in die Parklücke 8 eingeparkt werden soll. Hierzu werden entsprechende Beschleunigungs- und Verzögerungspunkte auf dieser Trajektorie 7 ermittelt. In diesem Beispiel stellt ein erster Beschleunigungspunkt die Ausgangsposition A dar. Ausgehend von dieser Position A wird also das Kraftfahrzeug 1 zunächst beschleunigt bis zu einem Bremspunkt B, an welchen entsprechend wiederum eine Verzögerung des Kraftfahrzeugs 1 einsetzen soll, um schließlich im Wendepunkt C zum Stillstand zu kommen. Dieser Wendepunkt C stellt gleichzeitig wiederum den nächsten Beschleunigungspunkt dar, an welchem wiederum eine Beschleunigung initiiert wird, um das Kraftfahrzeug 1 bis zum Endpunkt E zu bewegen. Um das Kraftfahrzeug schließlich am Endpunkt E zum Stillstand zu bringen, liegt zwischen dem Wendepunkt C und dem Endpunkt E wiederum ein Verzögerungspunkt D, zu welchem eine Verzögerung des Kraftfahrzeugs 1 einsetzen soll, damit dieses am Endpunkt E zum Stillstand kommt. Anhand gegebener Werte, wie dem Startzeitpunkt zum Starten des Einparkmanövers, den vorbestimmten Beschleunigungswerten zum Beschleunigen und Verzögern des Kraftfahrzeugs 1 auf den korrespondierenden Abschnitten der Trajektorie 7 sowie dem sogenannten Ruck, der die zeitliche Ableitung der Beschleunigung darstellt und angibt, wie lange es dauert, bis ein vorbestimmter Beschleunigungswert erreicht ist, sowie die gegebenen Weglängen der einzelnen Abschnitte der Trajektorie 7 lassen sich entsprechend auch die Zeitpunkte bestimmen, zu welchen zumindest theoretisch die entsprechenden Punkte, wie der erste Verzögerungspunkt B, der Wendepunkt C, der zweite Verzögerungspunkt D und der Endpunkt E erreicht werden.

Allerdings besteht in der Realität das Problem, dass wenn beispielsweise am Punkt D die Verzögerung des Kraftfahrzeugs initiiert wird, nicht unmittelbar auch am Punkt D diese Verzögerung durch das Kraftfahrzeug beziehungsweise die Bremseinrichtung umgesetzt wird, sondern erst später. Entsprechend kommt das Kraftfahrzeug 1 auch nicht am Endpunkt E wie gewünscht zum Stillstand, sondern um eine der Latenzzeit entsprechenden Weglänge versetzt. Um einen derartigen latenzzeitbedingten Versatz und eine daraus resultierende Verschiebung der tatsächlich gefahrenen Trajektorie gegenüber der berechneten Trajektorie 7 zu verhindern, wird nun vorteilhafterweise ein Schätzwert für die genannten Latenzzeiten ermittelt. Entsprechend werden dann die betreffenden Beschleunigungsvorgänge, in diesem Beispielverzögerungsvorgänge, nicht zu den vorbestimmten und zu den Beschleunigungspunkten B und D korrespondierenden Zeitpunkten eingeleitet, sondern um den Schätzwert früher zu den Zeitpunkten, welche zu den in Fig. 2 dargestellten neuen Initialisierungspunkten B' und D' korrespondieren. Hierdurch lassen sich nun auftretende Latenzzeiten vorteilhafterweise zumindest zum Teil kompensieren.

Latenzzeiten können bis zu 1000 Millisekunden oder auch mehr betragen, was enormen Einfluss auf den Streckenversatz, gerade bei sehr kurzen Beschleunigungsphasen, hat. Auch kleine Beschleunigungs- beziehungsweise Verzögerungswerte sowie kleine Ruckwerte verstärken diesen Effekt. Durch die Erfindung lässt sich dies auf funktionalem Niveau, auf dem die Beschleunigungswerte angefragt werden, vorteilhafterweise vermeiden.

Dieser Schätzwert, der also ein zeitliches Offset darstellt, wird vorzugsweise in Abhängigkeit von einer gemessenen Latenzzeit, insbesondere einem Mittelwert aus vielzähligen gemessenen Latenzzeiten, bestimmt. Diese mittleren Latenzzeiten können dabei auch situationsspezifisch bereitgestellt werden. Einer oder mehrere solcher mittleren Latenzzeiten können dann in dem Speicher 5 des Kraftfahrzeugs 1 abgelegt werden und zur Berechnung des Schätzwerts von der Steuereinrichtung 4 aus diesem ausgelesen werden. Vorzugsweise wird dieser Schätzwert weiterhin proportional zur mittleren Latenzzeit ermittelt. Zudem ist es vorteilhaft, nicht nur gemessene Latenzzeiten bei der Ermittlung des Schätzwerts zu berücksichtigen, sondern auch die Wegstrecke, die während einer Beschleunigungsphase zurückgelegt werden soll. Vorzugsweise ist der Schätzwert indirekt proportional zu dieser Wegstrecke, da dies den Vorteil hat, dass dem Umstand Rechnung getragen werden kann, dass sich Latenzzeiten bei größeren Streckenlängen deutlich weniger negativ bemerkbar machen als bei kürzeren Strecken. Für die in Fig. 2 dargestellten Beschleunigungs- beziehungsweise Verzögerungsphasen wird bei der Berechnung der jeweiligen Schätzwerte also vorzugsweise auch die betreffende Wegstrecke berücksichtigt. Dies bedeutet also beispielsweise für die Verzögerungsphase zwischen dem Punkt B und C die Wegstrecke 7a und in der Verzögerungsphase zwischen den Punkten D und E die Wegstrecke 7b.

Der Schätzwert kann sich zum Beispiel aus der bereitgestellten auf Messwerten basierenden mittleren Latenzzeit geteilt durch die entsprechende Weglänge für die Beschleunigungsphase berechnen lassen. Beträgt die mittlere Latenzzeit beispielsweise 500 Millisekunden und soll auf einer Weglänge von 2 m beschleunigt oder verzögert werden, so beträgt der Schätzwert entsprechend 250 Millisekunden. Auch wenn diese 250 Millisekunden eine Latenzzeit von 500 Millisekunden nicht vollständig kompensieren würden, wird dennoch ein großer Vorteil hinsichtlich der Reduzierung der Latenzzeiten erreicht. Zudem lassen sich hierdurch unnötige Eingriffe, das heißt vor allem bei langen Wegstrecken, auf ein Minimum reduzieren, da Latenzzeiten, wie beschrieben, bei solchen längeren Wegstrecken weniger relevant sind.

Fig. 3 zeigt verschiedene Verläufe 9, 10, 11 der Kraftfahrzeuggeschwindigkeit v in Abhängigkeit von der Zeit t, wobei insbesondere der zeitliche Verlauf 10 die Kraftfahrzeuggeschwindigkeit v bei einem Beschleunigen des Kraftfahrzeugs 1 gemäß einem Ausführungsbeispiel der Erfindung darstellt. In diesem Beispiel soll das Kraftfahrzeug 1 mit einer konstanten Geschwindigkeit fahren und dann ab einem bestimmten Punkt bis zum Stillstand abgebremst werden. Die Verläufe 9, 10, 11 sind hierbei nur rein schematisch und exemplarisch zu verstehen, das heißt bei einem Bremsvorgang muss sich die Kraftfahrzeuggeschwindigkeit v nicht notwendigerweise linear bis zum Stillstand verzögern. Der Verlauf 9 repräsentiert hierbei die theoretische Berechnung dieses Verzögerungsvorgangs. Hierzu werden, wie beispielsweise zu Fig. 2 beschrieben, anhand einer Trajektorie 7, ein erster Zeitpunkt t1 berechnet, zu welchem das Kraftfahrzeug 1 verzögert werden soll. Weiterhin wird auch ein Endzeitpunkt T1 berechnet, zu welchem das Kraftfahrzeug 1 den Stillstand erreicht haben soll. Bei herkömmlichen Beschleunigungs- beziehungsweise Bremsvorgängen, welche durch den Verlauf 11 repräsentiert werden, wird entsprechend zum Zeitpunkt t1 der Bremsvorgang initiiert. Aufgrund der Latenzzeit t_{L} zwischen dem Senden einer solchen Verzögerungsanforderung und dem tatsächlichen Verzögern des Kraftfahrzeugs, findet der eigentliche Bremsvorgang erst zu einem späteren Zeitpunkt t2 statt. Dies führt dazu, dass sich auch der korrespondierende Endzeitpunkt T2, zu welchem das Kraftfahrzeug letztendlich zum Stillstand kommt, gegenüber dem ursprünglich berechneten Endzeitpunkt T1 verschiebt.

Dieser Versatz lässt sich durch die Erfindung vorteilhafterweise zumindest reduzieren. Hierzu wird wie beschrieben ein Schätzwert tₛ für die Latenzzeit t_{L} berechnet und entsprechend der Beschleunigungsvorgang nicht zum vorher bestimmten ersten Zeitpunkt t1 eingeleitet, sondern um den Schätzwert tₛ früher zum Zeitpunkt t0. Bis zur tatsächlichen Ausführung des Bremsvorgangs vergeht wiederum die Latenzzeit t_{L}, sodass der Bremsvorgang zum Zeitpunkt t3 ausgeführt wird. Selbst wenn dadurch die Latenzzeit t_{L} nicht vollständig kompensiert werden kann, lässt sich hierdurch dennoch eine deutliche Verbesserung erzielen. Denn hierdurch kommt das Kraftfahrzeug 1 zu einem Zeitpunkt T3 zum Stillstand, welcher deutlich näher am eigentlich berechneten Endzeitpunkt T1 liegt als der Endzeitpunkt T2 ohne diese Kompensationsmaßnahme.

Insgesamt lässt sich so ein Verfahren, ein Kraftfahrzeugen und ein Fahrerassistenzsystem bereitstellen, welche ermöglichen, die Latenzzeiten bei Beschleunigungs- und Verzögerungsvorgängen auf einfache Weise deutlich zu reduzieren.

## Patentansprüche

1. Verfahren zum zumindest teilweisen Kompensieren einer Latenzzeit (t_{L}) bei einem Beschleunigen eines Kraftfahrzeugs (1), wobei zum Ausführen eines ersten Beschleunigungsvorgangs eine Beschleunigungsanforderung an eine Einrichtung (6) des Kraftfahrzeugs (1) gesendet wird und die Einrichtung (6) in Abhängigkeit von der Beschleunigungsanforderung das Kraftfahrzeug (1) beschleunigt, wobei ein erster Zeitpunkt (t1) für ein Initiieren des ersten Beschleunigungsvorgangs bestimmt wird, wobei vordem Initiieren des ersten Beschleunigungsvorgangs ein Schätzwert (tₛ) für die Latenzzeit (t_{L}) zwischen dem Senden der Beschleunigungsanforderung und dem Beschleunigen des Kraftfahrzeugs (1) bestimmt wird, wobei zum Initiieren des ersten Beschleunigungsvorgangs die Beschleunigungsanforderung zu einem zweiten Zeitpunkt (t0) an die Einrichtung (6) gesendet wird, der um den Schätzwert (tₛ) für die Latenzzeit (t_{L}) gegenüber dem ersten Zeitpunkt (t1) früher ist,
**dadurch gekennzeichnet, dass**
eine Fahrtrajektorie (7) für einen autonomen Fahrvorgang des Kraftfahrzeugs (1) bestimmt wird, wobei der erste Zeitpunkt (t1) in Abhängigkeit von der bestimmten Fahrtrajektorie (7) bestimmt wird, wobei der autonome Fahrvorgang einen Einparkvorgang des Kraftfahrzeugs (1) in eine Parklücke (8) darstellt, insbesondere wobei das Kraftfahrzeug (1) während des Einparkvorgangs auf der bestimmten Fahrtrajektorie (7) geführt wird.

2. Verfahren nach Anspruch 1,
**dadurch gekennzeichnet, dass**
ein Fahrverhalten eines Fahrers des Kraftfahrzeugs (1) beobachtet wird, wobei der erste Zeitpunkt (t1) in Abhängigkeit vom beobachteten Fahrverhalten bestimmt wird.

3. Verfahren nach Anspruch 2,
**dadurch gekennzeichnet, dass**
beim Beobachten des Fahrverhaltens vorbestimmte Phasen der Beschleunigung detektiert werden.

4. Verfahren nach einem der vorhergehenden Ansprüche,
**dadurch gekennzeichnet, dass**
der Schätzwert (tₛ) für die Latenzzeit (t_{L}) in Abhängigkeit von einer mittleren Latenzzeit, die einen Mittelwert von mehreren gemessenen Latenzzeiten darstellt, bestimmt wird.

5. Verfahren nach Anspruch 4,
**dadurch gekennzeichnet, dass**
während einer Fahrt des Kraftfahrzeugs (1) und im Fall, dass zumindest ein zweiter Beschleunigungsvorgang vordem Initiieren des ersten Beschleunigungsvorgangs durchgeführt wird, eine dem zumindest einen zweiten Beschleunigungsvorgang zugeordnete Latenzzeit zwischen einem Senden der dem zweiten Beschleunigungsvorgang zugeordneten zweiten Beschleunigungsanforderung und einem in Abhängigkeit von der zweiten Beschleunigungsanfrage durchgeführten Beschleunigen des Kraftfahrzeugs (1) gemessen wird, wobei die gemessene Latenzzeit eine der mehreren gemessenen Latenzzeiten, aus welchen die mittlere Latenzzeit ermittelt wird, darstellt.

6. Verfahren nach einem der vorhergehenden Ansprüche,
**dadurch gekennzeichnet, dass**
der Schätzwert (tₛ) in Abhängigkeit von mindestens einem Situationsparameter bestimmt wird, welcher mehrere verschiedenen Situation charakterisiert.

7. Verfahren nach Anspruch 6,
**dadurch gekennzeichnet, dass**
der mindestens eine Situationsparameter die Situationen durch zumindest eine der folgenden Größen charakterisiert: ein Gewicht des Kraftfahrzeugs (1), eine Anzahl von Insassen des Kraftfahrzeugs (1), eine Fahrbahnneigung einer Fahrbahn, ein Reibwert zwischen einem Rad des Kraftfahrzeugs (1) und einer Fahrbahn, ein Fahrbahnbelag und eine Wetterinformation.

8. Verfahren nach Anspruch 6 oder 7,
**dadurch gekennzeichnet, dass**
für die mehreren durch den mindestens einen Situationsparameter charakterisierbaren Situationen eine jeweilige mittlere Latenzzeit bereitgestellt wird, wobei zur Bestimmung des Schätzwerts (tₛ) diejenige der mittleren Latenzzeiten ausgewählt wird, die dem die aktuelle Situation charakterisierenden Situationsparameter zugeordnet ist.

9. Verfahren nach einem der vorhergehenden Ansprüche,
**dadurch gekennzeichnet, dass**
der Schätzwert (tₛ) in Abhängigkeit von einer räumlichen Länge einer Fahrtrajektorie (7a, 7b) bestimmt wird, auf welcher sich das Kraftfahrzeug (1) während des Ausführens des ersten Beschleunigungsvorgangs bewegt.

10. Verfahren nach Anspruch 9, **dadurch gekennzeichnet, dass**
der Schätzwert (tₛ) derart in Abhängigkeit von der räumlichen Länge bestimmt wird, dass dieser indirekt proportional zur räumlichen Länge ist.

11. Fahrerassistenzsystem (2) für ein Kraftfahrzeug (1), welches dazu ausgelegt ist, ein Verfahren nach einem der vorhergehenden Ansprüche durchzuführen.

12. Kraftfahrzeug (1) mit einem Fahrerassistenzsystem (2) nach Anspruch 11.

## Claims

1. Method for at least partially compensating a latency (t_{L}) when accelerating a motor vehicle (1), wherein, for carrying out a first acceleration procedure, an acceleration request is transmitted to an installation (6) of the motor vehicle (1), and the installation (6) accelerates the motor vehicle (1) as a function of the acceleration request, wherein a first temporal point (t1) for initiating the first acceleration procedure is determined, wherein, prior to initiating the first acceleration procedure, an estimate (tₛ) for the latency (t_{L}) between the transmission of the acceleration request and the acceleration of the motor vehicle (1) is determined, wherein, for initiating the first acceleration procedure, the acceleration request is transmitted to the installation (6) at a second temporal point (t0) which in relation to the first temporal point (t1) is earlier by the estimate (tₛ) for the latency (t_{L}),
**characterized in that**
a travel trajectory (7) for an autonomous driving procedure of the motor vehicle (1) is determined, wherein the first temporal point (t1) is determined as a function of the determined travel trajectory (7), wherein the autonomous driving procedure represents a parking procedure of the motor vehicle (1) into a parking bay (8), in particular wherein the motor vehicle (1) during the parking procedure is guided on the determined travel trajectory (7).

2. Method according to Claim 1,
**characterized in that**
a driving behaviour of a driver of the motor vehicle (1) is monitored, wherein the first temporal point (t1) is determined as a function of the monitored driving behaviour.

3. Method according to Claim 2,
**characterized in that**
predetermined phases of the acceleration are detected when monitoring the driving behaviour.

4. Method according to one of the preceding claims, **characterized in that**
the estimate (tₛ) for the latency (t_{L}) is determined as a function of a mean latency which represents a mean value of a plurality of measured latencies.

5. Method according to Claim 4,
**characterized in that**
during travel of the motor vehicle (1) and in the event of at least one second acceleration procedure being carried out prior to initiating the first acceleration procedure, a latency that is assigned to the at least one second acceleration procedure is measured between transmitting the second acceleration request assigned to the second acceleration procedure and an acceleration of the motor vehicle (1) that is carried out as a function of the second acceleration request, wherein the measured latency represents one of the plurality of measured latencies from which the mean latency is determined.

6. Method according to one of the preceding claims,
**characterized in that**
the estimate (tₛ) is determined as a function of at least one situation parameter which characterizes a plurality of different situations.

7. Method according to Claim 6,
**characterized in that**
the at least one situation parameter characterizes the situations by way of at least one of the following variables: a weight of the motor vehicle (1), a number of occupants of the motor vehicle (1), a carriageway inclination of a carriageway, a friction value between a wheel of the motor vehicle (1) and a carriageway, a carriageway surface, and an item of meteorological information.

8. Method according to Claim 6 or 7,
**characterized in that**
a respective mean latency is provided for the plurality of situations characterizable by way of the at least one situation parameter, wherein that mean latency of the mean latencies that is assigned to the situation parameter characterizing the current situation is selected for determining the estimate (tₛ).

9. Method according to one of the preceding claims,
**characterized in that**
the estimate (tₛ) is determined as a function of a spatial length of a travel trajectory (7a, 7b) on which the motor vehicle (1) moves while carrying out the first acceleration procedure.

10. Method according to Claim 9,
**characterized in that**
the estimate (tₛ) is determined as a function of the spatial length in such a manner that said estimate (tₛ) is indirectly proportional to the spatial length.

11. Driver assistance system (2) for a motor vehicle (1), said driver assistance system (2) being conceived for carrying out a method according to one of the preceding claims.

12. Motor vehicle (1) having a driver assistance system (2) according to Claim 11.

## Revendications

1. Procédé de compensation au moins partielle d'un temps de latence (t_{L}) lors d'une accélération d'un véhicule automobile (1), une demande d'accélération étant envoyée à un dispositif (6) du véhicule automobile (1) en vue d'exécuter une première opération d'accélération et le dispositif (6) accélérant le véhicule automobile (1) en fonction de la demande d'accélération, un premier instant (t1) pour une initiation de la première opération d'accélération étant déterminé, une valeur estimée (tₛ) pour le temps de latence (t_{L}) entre l'envoi de la demande d'accélération et l'accélération du véhicule automobile (1) étant déterminé avant l'initiation de la première opération d'accélération, la demande d'accélération, en vue d'initier la première opération d'accélération, étant envoyée au dispositif (6) à un deuxième instant (t0) qui est antérieur au premier instant (t1) de la valeur estimée (tₛ) pour le temps de latence (t_{L}),
**caractérisé en ce que**
une trajectoire de déplacement (7) pour une opération de déplacement autonome du véhicule automobile (1) est déterminée, le premier instant (t1) étant déterminé en fonction de la trajectoire de déplacement (7) déterminée, l'opération de déplacement autonome représentant une manœuvre d'entrée en stationnement du véhicule automobile (1) dans une place de stationnement (8), le véhicule automobile (1) étant notamment guidé sur la trajectoire de déplacement (7) déterminée pendant la manœuvre d'entrée en stationnement.

2. Procédé selon la revendication 1, **caractérisé en ce qu'**un comportement de conduite du conducteur du véhicule automobile (1) est observé, le premier instant (t1) étant déterminé en fonction du comportement de conduite observé.

3. Procédé selon la revendication 2, **caractérisé en ce que** des phases prédéterminées de l'accélération sont détectées lors de l'observation du comportement de conduite.

4. Procédé selon l'une des revendications précédentes, **caractérisé en ce que** la valeur estimée (tₛ) pour le temps de latence (t_{L}) est déterminée en fonction d'un temps de latence moyen qui représente une valeur moyenne de plusieurs temps de latence mesurés.

5. Procédé selon la revendication 4, **caractérisé en ce que** pendant un déplacement du véhicule automobile (1) et dans le cas où au moins une deuxième opération d'accélération est effectuée avant l'initiation de la première opération d'accélération, un temps de latence associé à l'au moins une deuxième opération d'accélération entre un envoi de la deuxième demande d'accélération associée à la deuxième opération d'accélération et une accélération du véhicule automobile (1) effectuée en fonction de la deuxième requête d'accélération est mesuré, le temps de latence mesuré représentant l'un des plusieurs temps de latence à partir desquels est identifié le temps de latence moyen.

6. Procédé selon l'une des revendications précédentes, **caractérisé en ce que** la valeur estimée (tₛ) est déterminée en fonction d'au moins un paramètre de situation qui caractérise plusieurs situations différentes.

7. Procédé selon la revendication 6, **caractérisé en ce que** l'au moins un paramètre de situation caractérise les situations par au moins l'une des grandeurs suivantes : le poids du véhicule automobile (1), un nombre d'occupants dans le véhicule automobile (1), une inclinaison de chaussée d'une chaussée, un coefficient de frottement entre une roue du véhicule automobile (1) et une chaussée, un revêtement de chaussée et une information météorologique.

8. Procédé selon la revendication 6 ou 7, **caractérisé en ce qu'**un temps de latence respectivement moyen est fourni pour les plusieurs situations **caractérisées par** l'au moins un paramètre de situation, les temps de latence moyens sélectionnés pour la détermination de la valeur estimée (tₛ) étant ceux qui sont associés au paramètre de situation qui caractérisé la situation actuelle.

9. Procédé selon l'une des revendications précédentes, **caractérisé en ce que** la valeur estimée (tₛ) est déterminée en fonction d'une longueur dans l'espace d'une trajectoire de déplacement (7a, 7b) sur laquelle se déplace le véhicule automobile (1) pendant l'exécution de la première opération d'accélération.

10. Procédé selon la revendication 9, **caractérisé en ce que** la valeur estimée (tₛ) est déterminée en fonction de la longueur dans l'espace de sorte que celle-ci est indirectement proportionnelle à la longueur dans l'espace.

11. Système d'assistance au conducteur (2) pour un véhicule automobile (1), lequel est conçu pour mettre en œuvre un procédé selon l'une des revendications précédentes.

12. Véhicule automobile (1) comprenant un système d'assistance au conducteur (2) selon la revendication 11.
